# EUROPÄISCHE PATENTSCHRIFT

(11) **EP 1 946 813 B1**
(45) Veröffentlichungstag und Bekanntmachung des Hinweises auf die Patenterteilung: **11.01.2012**
(21) Anmeldenummer: 07115734.1
(22) Anmeldetag: 05.09.2007
(51) Int. Cl.: B01D 29/21, B01D 46/52

(54) **Verfahren zur Herstellung eines Filtereinsatzes**
Method for manufacturing a filter insert
Procédé de fabrication d'un élément de filtration

(30) Priorität: 29.11.2006 DE 102006056552
(43) Veröffentlichungstag der Anmeldung: 23.07.2008
(73) Patentinhaber: MANN+HUMMEL GmbH, 71638 Ludwigsburg (DE)
(72) Erfinder: Rohrmeier, Josef, 84082, Laberweinting (DE); Rabanter, Anton, 84163, Marklkofen (DE); Rackerseder, Johann, 84168, Aham (DE)

(56) Entgegenhaltungen:
- DE-A1- 19 545 046
- DE-B3- 10 235 122

## Beschreibung

### Technisches Gebiet

Die Erfindung betrifft ein Verfahren zur Herstellung eines Filtereinsatzes, bestehend aus einem zick-zack-förmig gefalteten Filtermittel.

### Stand der Technik

Aus der EP 0 645 170 ist ein Verfahren zur Herstellung eines plattenförmigen Filtereinsatzes bekannt. Dieser Filtereinsatz besteht aus einem zick-zack-förmig gefalteten Filtermittel, wobei in einem ersten Arbeitsschritt Knickkanten geprägt werden, anschließend mit Leimauftragsvorrichtungen, welche mit Leimauftragsdüsen versehen sind, wenigstens zwei Leimraupen auf die Oberfläche des Filtermittels aufgetragen werden und danach die Faltung durchgeführt wird. Es ist ferner eine Schneidvorrichtung vorgesehen, welche das gefaltete Filtermittel in einzelne Filterelemente trennt.

Gemäß dem Stand der Technik wird das Filtermittel über Zahnriemen bewegt. Durch die Zahnriemen besteht die Möglichkeit, das Filtermittel sehr genau zu positionieren, solange es sich in der Produktionsanlage befindet. Muss ein Filtermittel in eine weitere Produktionsanlage überführt werden, dann wird es üblicherweise manuell entnommen und in die nächste Anlage für die Weiterverarbeitung eingesetzt. Dabei besteht jedoch die Gefahr, dass eine exakte Positionierung des Filtermittels nicht mehr gewährleistet ist.

Aus der DE 102 35 122 B3 ist ein flexibler Filter zu entnehmen, der durch die zu reinigende Luft nicht nennenswert verformbar ist und der einen plissierten Filterpack aufweist, an dessen zick-zack-förmig gefalteten Längsseiten jeweils ein streifenförmiges Rahmenelement mittels eines Klebers fixiert ist, wobei der flexible Filter in einer zur Faltung parallelen Richtung biegbar ist. Der Kleber wird auf dem jeweiligen Rahmenelement als Klebstreifen in einer definierten Breite aufgebracht, die kleiner ist als die Höhe der Faltung des Filterpacks, wobei der Klebestreifen in Bezug auf die Höhe der Faltung des Fliterpacks außermittig vorgesehen ist

Aus der DE 195 45 046 ist ein in nur eine Richtung biegsamer Faltenfilterpack zu entnehmen, wobei der Faltenfilterpack aus einem flexiblen Filtermedium besteht, dessen Falten in seitlicher Richtung beiderseits durch einen flexiblen Dichtstreifen verschlossen und durch einen Dichtstreifen gegenüber einem Gehäuse abdichtbar sind, wobei der Faltenfilterpack auf seinen Längsseiten mit zumindest einem Armierungselement verbunden ist.

### Offenbarung der Erfindung

Der Erfindung liegt die Aufgabe zugrunde, ein Verfahren zur Herstellung eines Filtereinsatzes zu schaffen, das die geschilderten Nachteile vermeidet, und einen Filtereinsatz mit hoher Präzision produziert.

Diese Aufgabe wird durch die Merkmale des unabhängigen Anspruchs 1 gelöst.

Der wesentliche Vorteil der Erfindung liegt darin, dass in einem ersten Arbeitsschritt Knickkanten geprägt werden, anschließend eine Faltung vorgenommen wird und nach dem Falten an den Seitenkanten des Filtermittels Leimraupen aufgetragen werden. Diese Leimraupen haben die Aufgabe, das zick-zack-förmig gefaltete Filtermittel hinsichtlich der Faltenteilung und des Faltenabstandes zu stabilisieren. Aufgrund dieser Stabilisierung kann das Filtermittel aus einer Vorrichtung entnommen werden und lässt sich prozesssicher in eine weitere Vorrichtung einsetzen. In der weiteren Vorrichtung besteht beispielsweise die Möglichkeit, einzelne Filterelemente herzustellen und zwar durch das Umspritzen des Filterelements mit einem thermoplastischen Kunststoff zur Bildung eines Rahmens.

Gemäß einer weiteren Ausgestaltung des Verfahrens werden die Leimraupen vor dem Aufbringen an den Seitenkanten auf ein Metallband aufgetragen. Dieses Metallband dient als Zwischenträger für die Leimraupen, die, sobald sie mit den Seitenkanten des Filtermittels in Berührung kommen, sich vollständig von dem Metallband lösen.

Weiterbildungsgemäß ist der Rahmen zum Umspritzen des Filtermaterials plattenförmig ausgestaltet und besteht aus einer Positiv- und einer Negativform. Die beiden Formen decken die wirksame Filterfläche des entstehenden Filtereinsatzes vollständig ab und lassen lediglich die Randbereiche der Seitenkanten frei, welche in dem Spritzgießwerkzeug mit thermoplastischem Kunststoff umspritzt werden. Sofern das fertige Produkt nicht ein plattenförmiger Filtereinsatz sondern ein ringförmiges Filterelement ist, wird das Filtermaterial nach dem Trennen in einzelne Filterelemente in eine konzentrische Form gebracht und in den Bereichen, in welchen die Leimraupen angeordnet sind, mit Endscheiben versehen. Auch hier dienen die Leimraupen zur Aufrechterhaltung der Faltenteilung beim Formen des Filterelements und beim Verbinden mit den Endscheiben.

Die Endscheiben werden mit dem Filterelement verschweißt oder verklebt.

Weiterbildungsgemäß verläuft die Leimraupe beim Filtereinsatz näherungsweise mittig zu den Falten des Filtermittels und deckt maximal 10 % der Höhe des Filterelements ab.

Diese und weitere Merkmale werden nicht nur in den Patentansprüchen, sondern auch in der Beschreibung und in den Zeichnungen beschrieben.

### Kurze Beschreibung der Zeichnungen

Es zeigen

Figur 1 eine schematische Darstellung einer Einrichtung zum Herstellen eines zick-zack-förmig gefalteten Filtermittels,

Figuren 2a - 2c perspektivische Ansichten von Filterelementen,

Figur 3 eine Variante eines Filterelements und

Figur 4 ein Werkzeug zum Herstellen eines thermoplastischen Kunststoffrahmens bei einem Filterelement.

### Ausführungsförm(en) der Erfindung

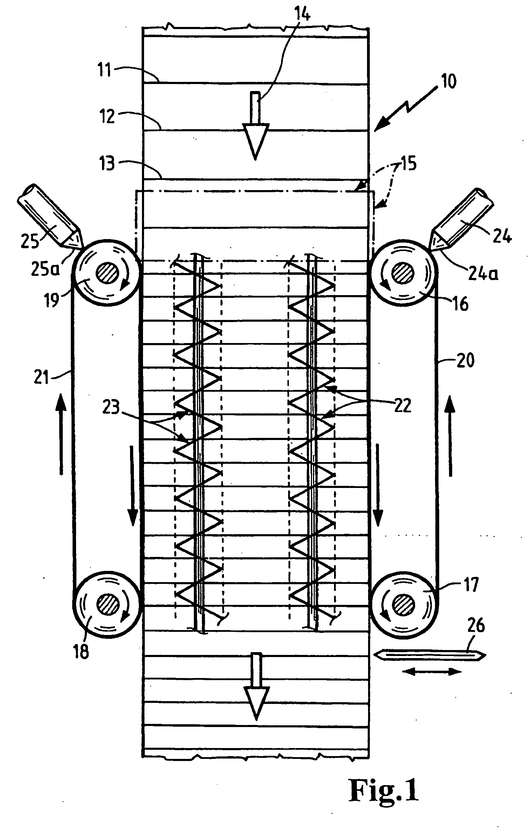

Figur 1 zeigt in einer Draufsicht ein Filtermittel 10. Dieses ist beispielsweise ein Vlies, welches von einer Rolle abgewickelt wird, eine bestimmte Breite aufweist und in einem ersten Arbeitsgang durch Prägemesser an den vorgesehenen Faltbereichen geprägt wird. Die Prägelinien 11, 12, 13 sind auf diesem Filtermittel 10 zu erkennen. Die Laufrichtung des Filtermittels ist durch den Pfeil 14 angedeutet. Das geprägte Filtermittel wird im Bereich 15 zick-zack-förmig gefaltet. Diesem Bereich 15 nachfolgend sind seitlich zu dem Filtermittel 10 angeordnet Rollen 16, 17, 18, 19 vorgesehen. An den Rollen 16, 17 ist ein umlaufendes Metallband 20, an den Rollen 18, 19 ein Metallband 21 angeordnet. Der lichte Abstand zwischen den beiden Metallbändern ist so gewählt, dass das zick-zack-förmig gefaltete Filtermittel im Bereich der Metallbänder mit diesen in Kontakt steht. Dem Bereich 15 nachfolgend angeordnet sind ferner - oberhalb des Filtermittels - zwei Spindeln 22, 23 vorgesehen, die in die ausgestellten Falten eingreifen und dafür sorgen, dass der Faltenabstand eingehalten wird. Im Bereich der Rollen 16, 19 befindet sich jeweils eine Schmelzkleberdüse 24, 25, die Düsenspitzen 24a, 25b sind auf das jeweilige Metallband 20, 21 gerichtet. Die Geschwindigkeit der beiden Metallbänder ist synchron zu der Transportgeschwindigkeit des zick-zack-förmig gefalteten Filtermittels gewählt. Wie bereits erwähnt, wird das Filtermittel 10 gemäß dem Pfeil 14 in die gesamte Einrichtung eingeführt, im Bereich 15 werden die Falten aufgestellt und diese Falten in die Spiralspindeln 22, 23 übergeben. Aus den Schmelzkleberdüsen 24, 25 wird eine Schmelzkleberspur auf die Metallbänder 20, 21 aufgetragen. Die Metallbänder übertragen die Schmelzkleberraupe aufgrund ihrer Synchrongeschwindigkeit an die Seitenkanten des Filtermittels 10, wobei der Schmelzkleber sich mit dem Filtermittel verbindet und längs des Transportweges des metallischen Bandes aushärtet. Eine den Rollen 17, 18 nachfolgend angeordnete Schneidevorrichtung 26 vereinzelt das Filtermaterial und stellt einzelne Filterelemente her. Diese sind aufgrund des seitlich aufgetragenen Schmelzklebers stabil, das heißt der Faltenabstand behält den durch die Spiralspindeln 22, 23 eingestellten Wert bei.

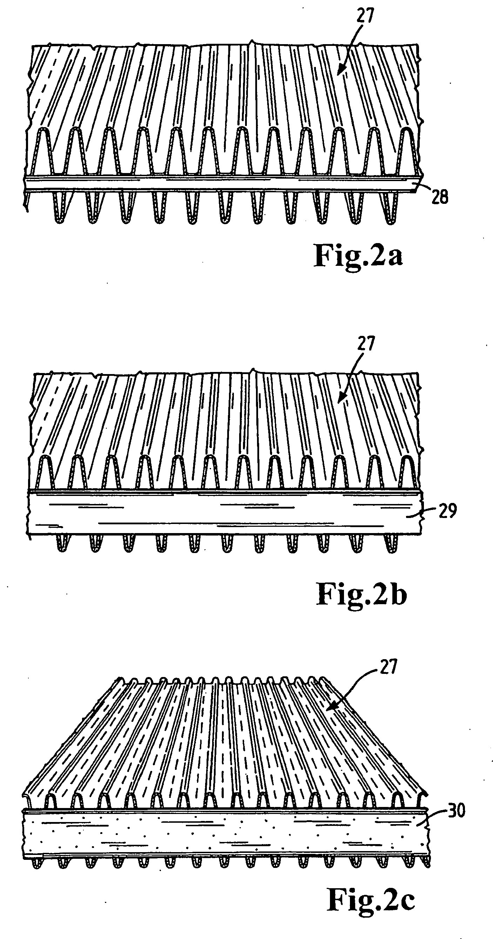

In Figur 2a ist ein zick-zack-förmig gefaltetes Filterelement 27 dargestellt. Es ist zu erkennen, dass der Schmelzkleber als dünne Kleberspur 28 längs der Seitenkanten verläuft. Eine seitliche Abdichtung wird durch die Kleberspur nicht hergestellt sondern lediglich die Stabilisierung der Falten. Figur 2b zeigt eine etwas breitere Kleberspur 29, Figur 2c zeigt eine Kleberspur 30, die nahezu vollständig die Seite des Filterelements 27 abdeckt und beispielsweise bei besonders hohen Anforderungen an die Genauigkeit der Falten angewendet werden kann. Selbstverständlich können unterschiedliche Breiten zur Anwendung kommen.

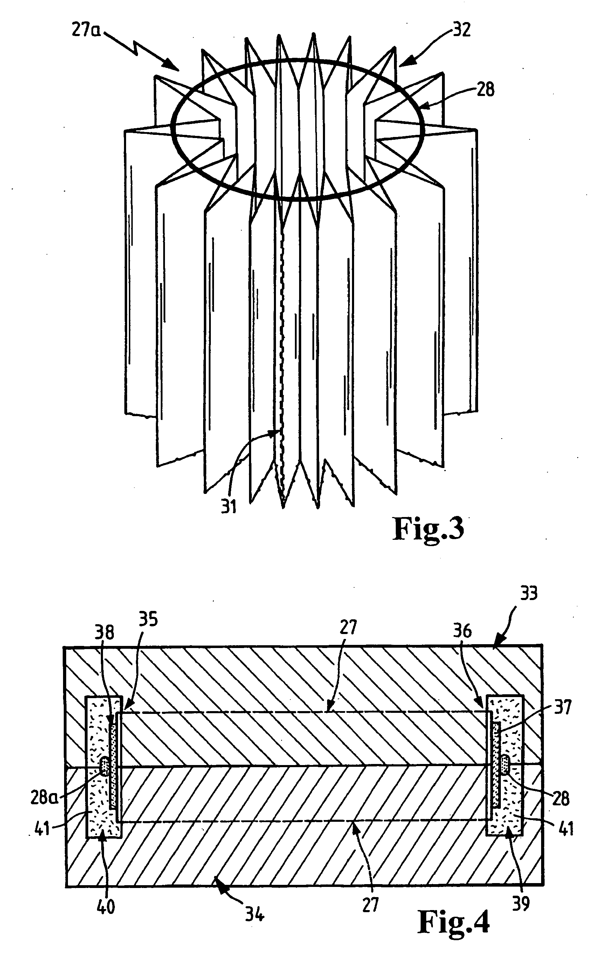

Figur 3 zeigt in einer perspektivischen Darstellung ein Rundfilterelement 27a. Auch dieses wurde nach dem Verfahren gemäß Figur 1 hergestellt. Nach dem Schneiden mittels der Schneidvorrichtung 26 wird dieses in eine konzentrische Form gebracht, wobei ein Endfaltenverschluss 31 vorgesehen ist. Der Endfaltenverschluss ist beispielsweise eine Klebeverbindung oder ein zusätzliches Befestigungsband. Die Kleberspur 28 sorgt auch hier für einen definierten Faltenabstand. Nach dem Formen des Filterelements kann im Bereich 32 eine thermoplastische Kunststoffendscheibe oder eine Endscheibe aus einem anderen Material auf die Stirnkante dieses konzentrischen Filterelements aufgeklebt oder aufgeschmolzen werden.

In Figur 4 ist ein Spitzgießwerkzeug, bestehend aus einem Werkzeugoberteil 33 und einem Werkzeugunterteil 34, in einer Schnittdarstellung gezeigt. In dieses Werkzeug wird ein Filterelement 27 gemäß Figuren 2a bis 2c eingelegt, dazu ist das Werkzeug so ausgestaltet, dass es zumindest im Bereich 35, 36 der Seitenkanten in die Falten eingreift und damit das Filterelement zuverlässig fixiert. Von dem Filterelement sind die Seitenkanten 37, 38 mit einem gewissen Überstand zu erkennen. Auf diesen Seitenkanten sind ebenfalls die Leimraupen 28, 28a sichtbar. Der durch die Werkzeuge gebildete Hohlraum 39, 40 auf beiden Seiten des Filterelements wird mit thermoplastischem Kunststoff 41 ausgefüllt. Nach dem Aushärten bildet der thermoplastische Kunststoff einen stabilen und das Filterelement abdichtenden Rahmen.

Selbstverständlich verläuft der Rahmen nicht nur an den Seiten des Filterelementes sondern auch an dem vorderen und hinteren Ende des Filterelements. Damit wird ein stabiler Filtereinsatz, beispielsweise zur Filtrierung der Innenraumluft eines Kraftfahrzeuges geschaffen.

## Patentansprüche

1. Verfahren zur Herstellung eines Filtereinsatzes bestehend aus einem zick-zack-förmig gefalteten Filtermittel (10), wobei zunächst in einem ersten Arbeitsschritt Knickkanten geprägt werden, anschließend eine Faltung durchgeführt wird, **dadurch gekennzeichnet, dass** nach dem Falten an den Seitenkanten des Filtermittels (10) Leimraupen (28, 28a) aufgetragen werden, welche längs des zick-zack-förmig gefalteten Filtermittels (10) verlaufen, und wobei mittels einer Schneidevorrichtung (26) das gefaltete Filtermaterial in einzelne Filterelemente (27) getrennt wird und die einzelnen Filterelemente (27) in einen Rahmen (33, 34) eingesetzt werden, der eine Kontur aufweist, in welcher ein Umspritzen des Filterelements (27) mit einem thermoplastischen Kunststoff zur Bildung eines Rahmens erfolgt.

2. Verfahren zur Herstellung nach Anspruch 1, **dadurch gekennzeichnet, dass** die Leimraupen (28, 28a) auf ein umlaufendes Band, insbesondere ein Metallband (20, 21), aufgetragen werden und über dieses Band (20, 21) an die Seitenkanten des Filtermittel (10) übertragen werden.

3. Verfahren zur Herstellung nach Anspruch 1 oder 2, **dadurch gekennzeichnet, dass** der Rahmen (33, 34) zum Umspritzen des Filtermaterials plattenförmig gestaltet ist und aus einer Positiv- und einer Negativform besteht, wobei die Formen wenigstens teilweise dem zick-zack-förmigen Verlauf des Filterelements (27) folgen.

## Claims

1. Method for manufacturing a filter insert consisting of a fanfold filter medium (10), bending edges being embossed in a first working step, a pleating being then carried out, **characterized in that** after the pleating glue beads (28, 28a) which run along the fanfold filter medium (10) are applied at the lateral edges of the filter medium (10) and the pleated filter material being divided into individual filter elements (27) by means of a cutting device (26) and the individual fileter elements (27) being inserted into a frame (33, 34) which features a contour in which an overmolding of the filter element (27) with thermoplastics for forming a frame is realized.

2. Method for manufacturing according to claim 1, **characterized in that** the glue beads (28, 28a) are applied onto a circumferentially band, in particular a metal band (20, 21) and via this band (20, 21) onto the lateral edges of the filter medium (10).

3. Method for manufacturing according to claim 1 or 2, **characterized in that** the frame (33, 34) for overmolding the filter material has a plate-shaped design and consists of a positive and a negative form, the forms following at least partially the fanfold run of the filter element (27).

## Revendications

1. Procédé de fabrication d'un insert de filtre comprenant un moyen filtrant (10) plié en accordéon, des bords de pliage étant d'abord gaufrés lors d'une première opération, puis un pliage étant réalisé, **caractérisé en ce que**, après le pliage, des cordons de colle (28, 28a) évoluant le long du moyen filtrant (10) plié en accordéon sont appliqués sur les bords latéraux du moyen filtrant (10), et le matériau filtrant plié étant divisé en différents éléments filtrants (27) à l'aide d'un dispositif de coupe (26) et les différents éléments filtrants (27) étant insérés dans un cadre (33, 34) comportant un contour dans lequel l'élément filtrant (27) est enrobé d'une matière thermoplastique en vue de former un cadre.

2. Procédé de fabrication selon la revendication 1, **caractérisé en ce que** les cordons de colle (28, 28a) sont appliqués sur une bande circulaire, notamment une bande métallique (20, 21) et sont reportés par l'intermédiaire de cette bande (20, 21) sur les bords latéraux du moyen filtrant (10).

3. Procédé de fabrication selon la revendication 1 ou 2, **caractérisé en ce que** le cadre (33, 34) d'enrobage du matériau filtrant est réalisé en forme de plaque et est constitué d'un moule positif et d'un moule négatif, les moules suivant, au moins en partie, la forme en accordéon de l'élément filtrant (27).
